# EUROPÄISCHE PATENTSCHRIFT

(11) **EP 3 032 724 B1**
(45) Veröffentlichungstag und Bekanntmachung des Hinweises auf die Patenterteilung: **13.05.2020**
(21) Anmeldenummer: 14197638.1
(22) Anmeldetag: 12.12.2014
(51) Int. Cl.: H02K 41/03, H02K 15/03

(54) **Sekundärteil mit Schablone**
Secondary part with template
Élément accessoire doté d'un gabarit

(30) Priorität: 11.12.2014 EP 14197288
(43) Veröffentlichungstag der Anmeldung: 15.06.2016
(73) Patentinhaber: Siemens Aktiengesellschaft, 80333 München (DE)
(72) Erfinder: Sailer, Hermann, 85411 Hohenkammer (DE)

(56) Entgegenhaltungen:
- EP-A1- 0 043 981
- CN-U- 204 013 121
- DE-A1- 4 235 873
- DE-A1-102013 007 674
- KR-A- 20110 080 879
- US-A- 4 857 786

## Beschreibung

Die Erfindung betrifft ein Sekundärteil für eine elektrische Maschine. Die Erfindung betrifft auch eine elektrische Maschine, die das Sekundärteil umfasst, sowie ein Verfahren zur Herstellung des Sekundärteils.

Die DE 195 03 511 A1 beschreibt ein derartiges Sekundärteil, elektrische Maschine, sowie ein derartiges Verfahren zur Herstellung des Sekundärteils und eine derartige Verwendung einer Schablone für das Sekundärteil. In der genannten Schrift wird eine elektrische Maschine als Synchron-Linearmotor beschrieben, der ein mit einer Wicklung versehenes Primärteil und ein Sekundärteil umfasst, das aus einer langgestreckten ferromagnetischen Trägerplatte besteht, auf der unter Einhaltung des Polteilungsrastermaßes die aus sprödem und korrosionsanfälligem Material bestehenden, fertig aufmagnetisierten Permanentmagnete festgeklebt sind. Um die fertig aufmagnetisierten Permanentmagnete mit geringem Herstellungsaufwand und mit hoher Präzision am Sekundärteil festkleben zu können, wird dort vorgeschlagen, dass zwischen den fertig aufmagnetisierten Permanentmagneten und dem Polteilungsrastermaß des Synchron-Linearmotors entsprechende Distanzelemente angeordnet sind. Die Distanzelemente können aus jeweils zwei in der Trägerteil nebeneinander angeordneten Distanzstiften bestehen oder Quersprossen sein, an denen die Permanentmagnete in ihrer gesamten Breite anliegen. Die Quersprossen sind dabei mittels Stifte an dem Trägerteil befestigt. Die Distanzelemente können auch jeweils aus Einzelrahmen bestehen, die einen oder mehrere Permanentmagnete umschließen. Die Einzelrahmen können dabei als Kunststoffspritzgießteile mit den geeigneten unmagnetischen Eigenschaften hergestellt werden. Die Distanzelemente, d.h. die Quersprossen, Stifte oder die als leiterartige Haltestruktur angeordneten Einzelrahmen sorgen beim Einfügen und Festkleben der Permanentmagnete für eine exakte Einhaltung des Polteilungsrastermaßes und verbleiben als Schablone auf der Trägerteil. Die offen liegenden Bereiche der Permanentmagnete können auch durch ein Abdeckblech geschützt werden, das an den Seiten mit Falzen versehen ist, die die Permanentmagnete an deren Seitenflächen direkt oder deren seitliche Positionierelemente, wie z.B. die Seitenleisten, die seitlichen Positionierstifte oder die Einzelrahmen umgreifen. Aufgrund der Federungswirkung der Falze ist das Abdeckblech mit dem Sekundärteil verbunden und bildet einen zuverlässigen Schutz gegen mechanische und korrosive Schadeinwirkungen.

Die KR 2011 0080879 A1 beschreibt einen Magnetweg als ein Sekundärteil für Linearmotoren mit einer Abschirmung gegen Fremdsubstanzen, um Fremdsubstanzen eines magnetischen Materials einfach entfernen zu können. Es wird auch ein Verfahren zur Herstellung des Sekundärteils beschrieben, bei der ein als Plastikabdeckung bezeichnetes Teil zum Festlegen der Position eines Magneten verwendet wird. Der Magnetweg wird mit dem Verfahren hergestellt, das die Schritte umfasst: Ein Klebstoff wird auf einem Rückeisen aufgebracht. Die Plastikabdeckung wird genau auf dem mit dem Klebstoff beschichteten Rückeisen positioniert. Der Klebstoff härtet aus. In einer Magneteinsetzöffnung der Plastikabdeckung wird Klebstoff aufgebracht. Ein Permanentmagnet wird in die Magneteinsatzöffnung eingesetzt. Der Klebstoff wird auf dem Permanentmagneten aufgebracht. Eine obere Abdeckung wird auf den mit Klebstoff beschichteten Permanentmagneten geklebt.

Die EP 0 043 981 A1 betrifft einen dauermagneterregten Läufer für eine elektrische Maschine. Um eine einfachere Montage der Dauermagnete zu erreichen. wird vorgeschlagen, dass der aus ferromagnetischem Material bestehende Läufer an seinem Umfang kreisförmig oder vieleckig ausgebildet ist und zumindest auf einem Teil der Umfangsfläche des Läufers schalen- oder plattenförmige Dauermagnete befestigt sind.

Die DE 42 35 873 A1 betrifft ein Verfahren zur Herstellung eines permanentmagneterregten Läufers, das eine vereinfachte Montage der Permanentmagnete am Außenumfang des Läufers dadurch ermöglicht, dass ein den Läuferkörper am Außenumfang umschließender, die Form eines mit Öffnungen versehenen Gitters aufweisender Rahmen lagestabil aufgebracht wird, wobei die Öffnungen nach Größe und Form exakt den am Außenumfang des Läuferkörpers aufzubringenden Permanentmagneten entsprechen und die Lage der Öffnungen am Außenumfang durch die Polteilung des Läufers festgelegt ist und bei dem anschließend die Permanentmagnete in die Öffnungen eingesetzt und am Läuferkörper befestigt werden.

Die DE 10 2013 007 674 A1 betrifft ein Sekundärteil für einen Linearmotor, welches zumindest ein Sekundärteilelement, das eine Laufbahn mit einer Verfahrrichtung für einen Läufer des Linearmotors definiert, und eine Abdeckung für das wenigstens eine Sekundärteilelement, aufweist, welche zwischen dem zumindest einen Sekundärteilelement und dem Läufer angeordnet ist, wobei die Abdeckung ein Abdeckelement und wenigstens einen davon sekundärteilelementseitig abstehenden Steg aufweist, der in eine zugeordnete Nut, welche in dem wenigstens einen Sekundärteilelement ausgebildet ist, eingreift, um die Abdeckung an dem wenigstens einen Sekundärteilelement zu halten.

Der Erfindung liegt die Aufgabe zugrunde, einen technischen Beitrag zu einem Sekundärteil für eine elektrische Maschine zu leisten, mit dem das Sekundärteil kostengünstig und in hoher Qualität zur Verfügung gestellt werden kann und für eine elektrische Maschine kostengünstig und in hoher Qualität verwendet werden kann.

Die Aufgabe wird durch ein erfindungsgemäßes Sekundärteil mit den Merkmalen des Anspruchs 1 gelöst.

Die Aufgabe wird auch durch eine erfindungsgemäße elektrische Maschine mit den Merkmalen des Anspruchs 9 gelöst.

Die Aufgabe wird auch durch ein erfindungsgemäßes Verfahren zur Herstellung eines erfindungsgemäßen Sekundärteils mit den Merkmalen nach Anspruch 10 gelöst.

Die Aufgabe wird erfindungsgemäß vorteilhaft gelöst, indem die Schablone ein Anordnen und Befestigen der Permanentmagnete bei einer erfindungsgemäßen Herstellung vorteilhaft kostengünstig in einer hohen Qualität ermöglicht und die Permanentmagnete vorteilhaft kostengünstig in einer hohen Qualität schützt, insbesondere bei einer Verwendung als Sekundärteil einer elektrischen Maschine.

Vorteilhaft kostengünstig kann ein erfindungsgemäßes Sekundärteil mit einem erfindungsgemäßen Verfahren in einer hohen Qualität hergestellt werden.

Das Trägerteil erstreckt sich in einer ersten Richtung und weist die Oberseite auf, an der die Permanentmagnete in der ersten Richtung nebeneinander zwischen den Distanzelementen angeordnet sind. Eine zweite Richtung erstreckt sich senkrecht zu der ersten Richtung parallel zur Oberseite des Trägerteils. Eine dritte Richtung verläuft senkrecht zur ersten Richtung und senkrecht zur zweiten Richtung. Das Trägerteil weist ein ferromagnetisches Material auf, um einen in einem Betrieb einer elektrischen Maschine erzeugten magnetischen Fluss zu führen, insbesondere von einem Permanentmagneten zu einem weiteren Permanentmagneten.

Eine erfindungsgemäße elektrische Maschine weist den weiteren Vorteil auf, dass vorteilhaft kostengünstig in einer hohen Qualität eine erfindungsgemäße elektrische Maschine die erfindungsgemäßen Sekundärteile verwenden kann. Die Permanentmagnete können vorteilhaft befestigt und geschützt entlang der Ebene angeordnet sein, um mit dem Primärteil magnetisch zusammenzuwirken. Unter anderem kann über einen langen Zeitraum eine hohe Qualität der elektrischen Maschine, insbesondere bei deren Betrieb, vorteilhaft erreicht werden.

In einem Betrieb einer erfindungsgemäßen elektrischen Maschine kann sich das Primärteil relativ zu dem erfindungsgemäßen Sekundärteil oder das erfindungsgemäße Sekundärteil relativ zum Primärteil in der Ebene bewegen oder das Primärteil und das erfindungsgemäße Sekundärteil können in einer bestimmten Position gehalten werden, um Kraft bereitzustellen. Dabei kann das erfindungsgemäße Sekundärteil über den Luftspalt mit dem Primärteil zusammenwirken, indem das Primärteil wenigstens eine Wicklung aufweist, in der in einem Betrieb einer erfindungsgemäßen elektrischen Maschine ein elektrischer Strom fließen kann.

In einem Betrieb einer erfindungsgemäßen elektrischen Maschine kann auch mechanische Energie durch eine relative Bewegung zwischen Primärteil und Sekundärteil in der Ebene zugeführt werden und elektrische Energie an der mindestens einen Wicklung für einen elektrischen Verbraucher entnommen werden.

Ein erfindungsgemäßes Verfahren zur Herstellung eines erfindungsgemäßen Sekundärteils weist den weiteren Vorteil auf, dass die Schablone kostengünstig in einer hohen Qualität sowohl ein Anordnen und Befestigen der Permanentmagnete vorteilhaft ermöglicht, als auch zum Schutz der Permanentmagnete an einem erfindungsgemäßen Sekundärteil vorteilhaft verbleibt. Vorteilhaft müssen keine Prozesse vorgesehen werden, die punktuelle Befestigungsmöglichkeiten herstellen. Derartige Prozesse sind zeitintensiv und werkzeugintensiv und benötigen eine lange Installationszeit, da bei diesen Prozessen Werkzeuge verschiedene Stellen des Sekundärteils anfahren, dort anhalten, eine Befestigungsmöglichkeit schaffen (z.B. durch Bohren, Gewindeschneiden) und die nächste Stelle anfahren. Weiterhin kann bei einem erfindungsgemäßen Verfahren bereits ein Schutz der Permanentmagnete während der Herstellung vorteilhaft erreicht werden.

Eine Verwendung einer Schablone mit Distanzelementen für ein erfindungsgemäßes Sekundärteil weist den weiteren Vorteil auf, dass die Schablone kostengünstig in einer hohen Qualität sowohl zur Herstellung eines erfindungsgemäßen Sekundärteils verwendet werden kann, als auch zum Schutz der Permanentmagnete eines erfindungsgemäßen Sekundärteils, insbesondere bei einer Verwendung als Sekundärteil einer elektrischen Maschine. Vorteilhaft müssen keine zusätzlichen Befestigungselemente für die Schablone oder Schutzelemente für die Permanentmagnete zur Verfügung gestellt werden.

Vorteilhafte Ausgestaltungen der Erfindung sind in den abhängigen Ansprüchen angegeben. Es wird hierbei vorteilhaft ein technischer Beitrag zur vorteilhaften Ausgestaltung eines erfindungsgemäßen Sekundärteils für eine elektrische Maschine geleistet, mit dem das Sekundärteil kostengünstig und in hoher Qualität zur Verfügung gestellt werden kann und für eine elektrische Maschine kostengünstig und in hoher Qualität verwendet werden kann.

Die Ausgestaltung des erfindungsgemäßen Sekundärteils für eine elektrische Maschine ist derart ausgebildet, dass die Schablone ein erstes Schablonenteil umfasst, wobei das erste Schablonenteil ein Verbindungsstück aufweist, das an einer ersten Seite der Permanentmagnete entlang dem Trägerteil verläuft und stoffschlüssig die Distanzelemente an der ersten Seite der Permanentmagnete miteinander verbindet. Es können so vorteilhaft, insbesondere bei einem erfindungsgemäßen Verfahren, die Distanzelemente durch Positionieren des ersten Schablonenteils positioniert werden und die Permanentmagnete von einer zweiten Seite entlang den Distanzelementen eingeschoben und damit angeordnet werden. Vorteilhaft kann hierfür das erste Schablonenteil auf einer Unterlage positioniert werden und die Permanentmagnete von der zweiten Seite entlang der Unterlage und den Distanzelementen eingeschoben werden. Vorteilhaft weist hierfür die Unterlage eine magnetische Vorrichtung für ein Halten der Permanentmagnete auf. Durch das Halten können die Permanentmagnete vorteilhaft entlang der Unterlage verschoben werden, ohne dass sie sich von der Unterlage lösen.

Das erste Schablonenteil kann ein Kunststoffteil sein. So kann vorteilhaft eine geringere Gefahr des Splitterns oder Brechens der Permanentmagnete und eine höhere Genauigkeit beim Anordnen der Permanentmagnete und beim Verkleben erreicht werden. Zu einer geringeren Gefahr des Splitterns oder Brechens der Permanentmagnete trägt vorteilhaft bei, dass Kunststoff im Vergleich zu metallischen Werkstoffen ein weicheres Material ist und die Distanzelemente aufgrund ihrer einseitigen Verbindung im ersten Schablonenteil auf einen Stoß mit den Permanentmagneten vorteilhaft elastisch nachgiebig reagieren.

In einer weiteren vorteilhaften Ausgestaltung eines erfindungsgemäßen Sekundärteils für eine elektrische Maschine weisen die Distanzelemente an freien Enden des ersten Schablonenteils Einführschrägen zum Einschieben der Permanentmagnete auf. Es können so vorteilhaft die Permanentmagnete durch die Einführschrägen in Räume zwischen die Distanzelemente hineingeführt werden, um zwischen den Distanzelementen angeordnet zu werden. Die Einführschrägen können vorteilhaft mit einem elastischen Material des ersten Schablonenteils zusammenwirken, um die Permanentmagnete durch eine elastische Nachgiebigkeit und gegebenenfalls eine federnde Wirkung der Einführschrägen in die Räume zwischen die Distanzelemente hineinzuführen.

Beim erfindungsgemäßen Sekundärteil umfasst die Schablone ein zweites Schablonenteil, das zumindest stückweise an einer der ersten Seite abgewandten zweiten Seite der Permanentmagnete entlang des Trägerteils verläuft. Es kann so vorteilhaft der Klebestoff zu einer vorteilhaft festen und dauerhaften Befestigung auf die Permanentmagnete aufgebracht werden. Die mit dem Trägerteil zu verklebende Seite der Permanentmagnete kann hierzu vorteilhaft vollständig mit Klebstoff versehen werden, wobei vorteilhaft außerhalb der Permanentmagnete und der Schablone, z.B. auf der Unterlage, Klebstoff vermieden werden kann.

Es kann auch das zweite Schablonenteil mit Distanzelementen zwischen den Permanentmagneten stoffschlüssig verbunden sein. Es kann so vorteilhaft durch eine verzahnte Verbindung zwischen dem ersten, dem zweiten Schablonenteil, den Permanentmagneten und dem Trägerteil eine feste dauerhafte Befestigung erreicht werden. Vorteilhaft können hierzu Klebeflächen vorhanden sein, die sich in ihrer Längserstreckung in verschiedenen Richtungen erstrecken.

Es können zwischen den Distanzelementen des ersten und zweiten Schablonenteils Zwischenräume vorhanden sein. Es können so vorteilhaft das erste und das zweite Schablonenteil mit den Permanentmagneten in Kontakt gebracht werden, und gegebenenfalls bei mehreren in der zweiten Richtung hintereinander angeordneten Permanentmagneten diese vorteilhaft seitlich in Kontakt gebracht werden.

Bei dem erfindungsgemäßen Sekundärteil für eine elektrische Maschine sind das erste Schablonenteil und das zweite Schablonenteil identische Schablonenteile. Es kann so vorteilhaft das erste und zweite Schablonenteil in hohen Stückzahlen mit einer hohen Qualität in den Abmessungen hergestellt werden.

In einer weiteren vorteilhaften Ausgestaltung eines erfindungsgemäßen Sekundärteils für eine elektrische Maschine weist das Sekundärteil an der Oberseite des Trägerteils zwischen Fasen der Schablone und den Permanentmagneten Klebstoffspalte auf. Es kann so vorteilhaft durch Klebstoff entlang der Umfänge der Permanentmagneten in den Klebstoffspalten zwischen dem ersten, dem zweiten Schablonenteil, den Permanentmagneten und dem Trägerteil eine feste dauerhafte Befestigung durch Verkleben vorteilhaft erreicht werden.

In einer weiteren vorteilhaften Ausgestaltung eines erfindungsgemäßen Sekundärteils für eine elektrische Maschine weisen die Distanzelemente an einem ersten und einem zweiten Ende der Schablone eine Breite B auf, die der Hälfte eines Abstandes A zwischen zwei Permanentmagneten des Sekundärteils entspricht. Es können so vorteilhaft zwei erfindungsgemäße Sekundärteile aneinandergereiht werden, ohne auf eine vorteilhaft durchgehende Oberfläche der Permanentmagnete mit den Schablonen zweier erfindungsgemäßer Sekundärteile verzichten zu müssen.

In einer weiteren vorteilhaften Ausgestaltung eines erfindungsgemäßen Sekundärteils für eine elektrische Maschine bilden die Schablone und die Permanentmagnete eine geschlossene Oberfläche. Es können so vorteilhaft die Schablone und die Permanentmagnete mit einer übergreifenden Fixiervorrichtung in ihrer relativen Position zueinander gehalten werden, bis der Klebstoff ausgehärtet ist.

Es kann ein Klebstoff zwischen der Schablone, den Permanentmagneten und dem Trägerteil vorhanden sein, der im Vergleich zu einem Sekundenkleber eine lange Aushärtezeit aufweist. Es kann so eine feste dauerhafte Befestigung der Permanentmagnete und der Schablone auch unter schwankenden Umgebungseinflüssen, z.B. durch Temperaturschwankungen im Betrieb einer erfindungsgemäßen elektrischen Maschine, vorteilhaft erreicht werden.

Es können durch die Schablone und die Permanentmagnete alle mit Klebstoff versehenen Flächen abgedeckt sein. So können auch Klebstoffe vorteilhaft verwendet werden, die im ausgehärteten Zustand staub- oder schmutzanziehend sind.

In einer weiteren vorteilhaften Ausgestaltung eines erfindungsgemäßen Sekundärteils für eine elektrische Maschine weisen die Schablone und die Permanentmagnete eine lackierte Oberfläche auf. Es kann so eine vorteilhaft geschlossene und ebene Oberfläche des Sekundärteils zum Luftspalt hin erreicht werden. Es kann hierdurch das Einlagern von Fremdkörpern zwischen den Permanentmagneten vorteilhaft verringert werden, die zu einer Beschädigung des relativ zueinander bewegten Primär- und Sekundärteils führen können. Es können auch die Permanentmagnete gegen korrosive Schadeinwirkungen vorteilhaft geschützt werden. Es kann die Lackierung der Permanentmagnete vorteilhaft nach dem Verkleben der Permanentmagnete und der Schablone mit der Trägerplatte vorgenommen werden. Hierdurch wird ein Lackieren der Permanentmagnete vor dem Kleben vorteilhaft vermieden, das sich negativ auf die Befestigung der Permanentmagnete auswirken kann.

In einer weiteren vorteilhaften Ausgestaltung eines erfindungsgemäßen Sekundärteils für eine elektrische Maschine ist das Sekundärteil mit einem Verfahren hergestellt, bei dem die Permanentmagnete zwischen den Distanzelementen der Schablone angeordnet werden und die Permanentmagnete und die Schablone mit einem Klebstoff versehen werden und das Trägerteil mit seiner Oberseite auf dem Klebstoff angeordnet wird. Es kann so vorteilhaft eine feste dauerhafte Befestigung der Permanentmagnete und der Schablone erfolgen. Unter anderem wird vorteilhaft ein gemeinsames Verkleben der Schablone und der Permanentmagnete mit dem Trägerteil erreicht. Dies führt zu einem vorteilhaft dauerhaften festen Verbund zwischen Trägerplatte, Permanentmagneten und Schablone. Aufgrund des verklebten Verbundes aus Trägerplatte, Permanentmagnete und Schablone kann in vielen Verwendungen des Sekundärteils auch eine ausreichende Befestigung der Permanentmagnete vorteilhaft erreicht werden, wenn sich der Klebstoff in Teilflächen unter den Permanentmagneten und der Schablone erstreckt.

In einer weiteren vorteilhaften Ausgestaltung eines erfindungsgemäßen Verfahrens zur Herstellung eines erfindungsgemäßen Sekundärteils werden vor dem Anordnen der Permanentmagnete zwischen den Distanzelementen die Distanzelemente auf einer Unterlage positioniert, wobei die Permanentmagnet und die Schablone auf eine der Unterlage abgewandten Seite mit einem Klebstoff versehen werden, wobei das Trägerteil mit seiner Oberseite auf dem Klebstoff angeordnet wird. Es kann so vorteilhaft eine feste dauerhafte Befestigung der Permanentmagnete und der Schablone erfolgen. Vorteilhaft wird das Trägerteil durch den Klebstoff gedämpft auf den Permanentmagneten angeordnet. Wenn bei einer Herstellung eines Sekundärteils der Abstand zwischen einem Permanentmagneten und dem Trägerteil verringert wird, um den Permanentmagneten auf dem Trägerteil zu befestigen, erreicht man irgendwann einen kritischen Abstand, bei dem die Kräfte zwischen dem Permanentmagneten und der Trägerplatte so groß sind, dass der Permanentmagnet schlagartig gegen das Trägerteil knallt. Hierbei können Teile des Permanentmagneten absplittern oder der Permanentmagnet kann sogar brechen. Weiterhin ist der gegenüber dem Trägerteil kleinere Permanentmagnet aufgrund der stark unterschiedlichen Abmessungen schwierig zu positionieren, insbesondere wenn schlagartig die Magnetkräfte den Permanentmagneten in Richtung Trägerplatte beschleunigen. Bei einem erfindungsgemäßen Verfahren wird nicht nur vorteilhaft der Aufprall des Trägerteils auf dem Permanentmagneten gedämpft, sondern auch vorteilhaft das in den Abmessungen gegenüber einem Permanentmagneten größere Trägerteil auf einer Anordnung von Permanentmagneten und Schablonen gleicher Größenordnung angeordnet.

Es kann bei einem erfindungsgemäßen Verfahren zur Herstellung eines erfindungsgemäßen Sekundärteils das Trägerteil gegen einen Anschlag gedrückt mit seiner Oberseite zum Klebstoff geführt werden. Es können so die Permanentmagnete und die Schablone vorteilhaft in einer genauen Position relativ zum Trägerteil auf dem Trägerteil befestigt werden.

In einer weiteren vorteilhaften Verwendung einer Schablone mit Distanzelementen für einen erfindungsgemäßen Sekundärteil wird die Schablone beim Versehen der Permanentmagnete mit einem Klebstoff verwendet. Die Schablone kann so vorteilhaft den Bereich definieren, in dem die Permanentmagnete mit dem Klebstoff versehen werden. So können vorteilhaft die Permanentmagnete mit einer optimalen Menge an Klebstoff versehen werden. Unter anderem kann die Schablone vorteilhaft für eine optische Erkennung der Ränder der Permanentmagnete verwendet werden, um diese über ihre gesamte der Oberseite des Trägerteils zugewandten Fläche mit Klebstoff zu versehen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die anhand der Figuren näher erläutert werden.

Es zeigen:
- FIG 1: ein Ausführungsbeispiel eines Sekundärteils,
- FIG 2: eine perspektivische Ansicht eines Schnittes entlang der Linie II-II durch das Sekundärteil gemäß der FIG 1,
- FIG 3: ein Ausführungsbeispiel einer elektrischen Maschine,
- FIG 4: eine Momentaufnahme eines Ausführungsbeispiels eines Verfahrens bei einem Anordnen der Permanentmagnete,
- FIG 5: eine Momentaufnahme eines Ausführungsbeispiels eines Verfahrens bei einer Montage eines zweiten Schablonenteils,
- FIG 6: eine Momentaufnahme eines Ausführungsbeispiels eines Verfahrens nach einem Versehen der Permanentmagnete und der Schablone mit einem Klebstoff,
- FIG 7: eine Momentaufnahme eines Ausführungsbeispiels eines Verfahrens bei einem Anordnen eines Trägerteils mit seiner Oberseite auf dem Klebstoff, und
- FIG 8: eine Ansicht einer Oberseite eines weiteren Ausführungsbeispiels eines Sekundärteils.

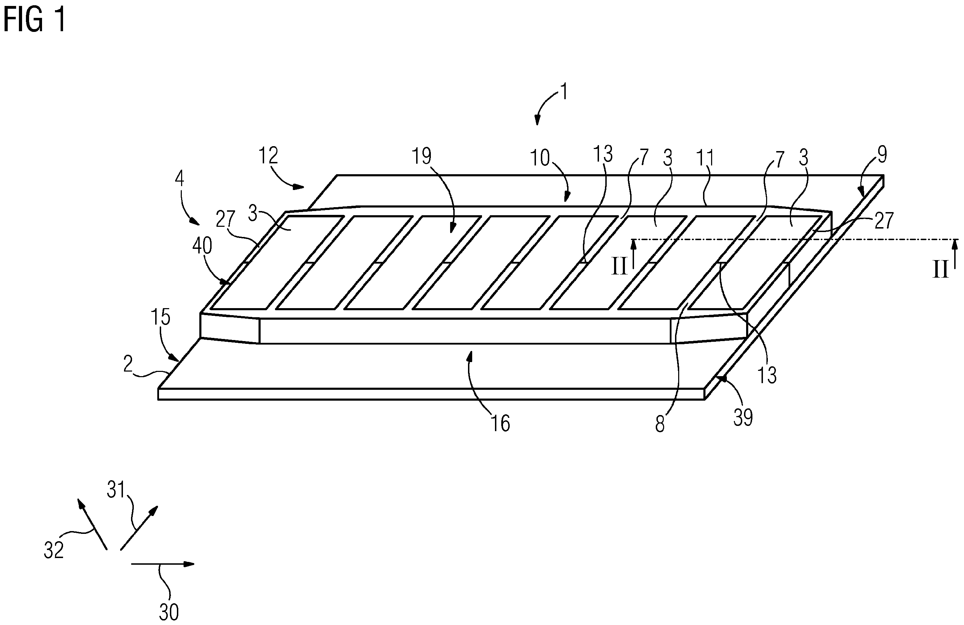

Figur 1 zeigt ein Ausführungsbeispiel eines Sekundärteils 1 für eine elektrische Maschine 6, wobei das Sekundärteil 1 ein Trägerteil 2 mit einem ferromagnetischen Material, Permanentmagnete 3, und eine Schablone 4 mit Distanzelementen 7,27 umfasst. Das Trägerteil 2 ist eine Trägerplatte aus einer ferromagnetischen Stahlplatte. So kann das Trägerteil 2 zusätzlich vorteilhaft aus einem Stück hergestellt werden. Die Permanentmagnete 3 sind zwischen den Distanzelementen 7,8 angeordnet. Die Permanentmagnete 3 und die Schablone 4 sind zur Befestigung auf einer Oberseite 9 des Trägerteils 2 mit diesem verklebt. Das Trägerteil 2 erstreckt sich in einer ersten Richtung 30 und weist die Oberseite 9 auf, an der die Permanentmagnete 3 in der ersten Richtung 30 nebeneinander zwischen den Distanzelementen 7 angeordnet sind. Die Permanentmagnete 3 sind unter Einhaltung des Polteilungsrastermaßes für einen Betrieb der elektrischen Maschine 6 in der ersten Richtung 30 nebeneinander zwischen den Distanzelementen 7,27 angeordnet. Eine zweite Richtung 31 erstreckt sich senkrecht zu der ersten Richtung 30 parallel zur Oberseite 9 des Trägerteils 2. Eine dritte Richtung 32 verläuft senkrecht zu der ersten Richtung 30 und senkrecht zu der zweiten Richtung 31. Die Schablone 4 umfasst ein erstes Schablonenteil 10 aus einem Kunststoff, wobei es ein Verbindungsstück 11 aufweist, das an einer ersten Seite 12 der Permanentmagnete 3 entlang dem Trägerteil 2 verläuft und stoffschlüssig die Distanzelemente 7 an einer ersten Seite 12 der Permanentmagnete 3 miteinander verbindet. Das Verbindungsstück 11 verläuft so entlang dem Trägerteil 2 in der ersten Richtung 30. Das erste Schablonenteil 10 ist zusätzlich vorteilhaft in einem Stück aus einem Kunststoff hergestellt. Die Schablone 4 umfasst ein zweites Schablonenteil 16, das zumindest stückweise an einer der ersten Seite 12 abgewandten zweiten Seite 15 der Permanentmagnete 3 entlang des Trägerteils 2 verläuft. Erfindungsgemäß sind in der Figur 1 das erste und das zweite Schablonenteil 10,16 identische Schablonenteile. Das erste Schablonenteil 10 wird als Spritzgussteil hergestellt und kann durch eine Drehung um 180° in einer Ebene, die durch die erste Richtung 30 und die zweite Richtung 31 aufgespannt wird, als zweites Schablonenteil 16 verwendet werden. Die Schablone 4 und die Permanentmagnete 3 bilden eine geschlossene Oberfläche 19. Das zweite Schablonenteil 16 ist mit Distanzelementen 8 zwischen den Permanentmagneten 3 stoffschlüssig verbunden.

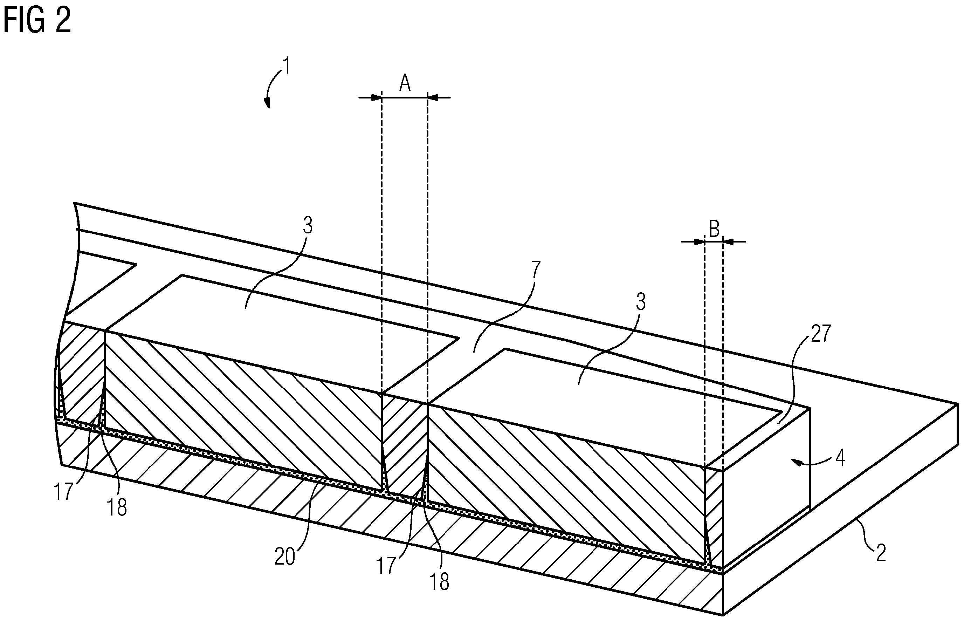

Figur 2 zeigt eine perspektivische Ansicht eines Schnitts entlang der Linie II-II durch das Sekundärteil 1 gemäß Figur 1. Das Sekundärteil 1 weist an der Oberseite 9 des Trägerteils 2 zwischen Fasen 17 der Schablone 4 und den Permanentmagneten 3 Klebstoffspalte 18 auf. Zwischen den Permanentmagneten 3 und der Trägerplatte 2 ist eine Schicht aus Klebstoff 20 vorhanden, die sich unter dem Distanzelement 7 von einem Permanentmagnet 3 zu dem benachbarten Permanentmagnet 3 erstreckt. Hierbei ist in den Klebstoffspalten 18 der Klebstoff 20 von der Trägerplatte 2 her in Richtung der Oberfläche 19 vorgedrungen. Die Distanzelemente 27 an einem ersten und einem zweiten Ende der Schablone 4 weisen eine Breite B auf, die der Hälfte eines Abstands A zwischen zwei Permanentmagneten 3 des Sekundärteils 1 entspricht.

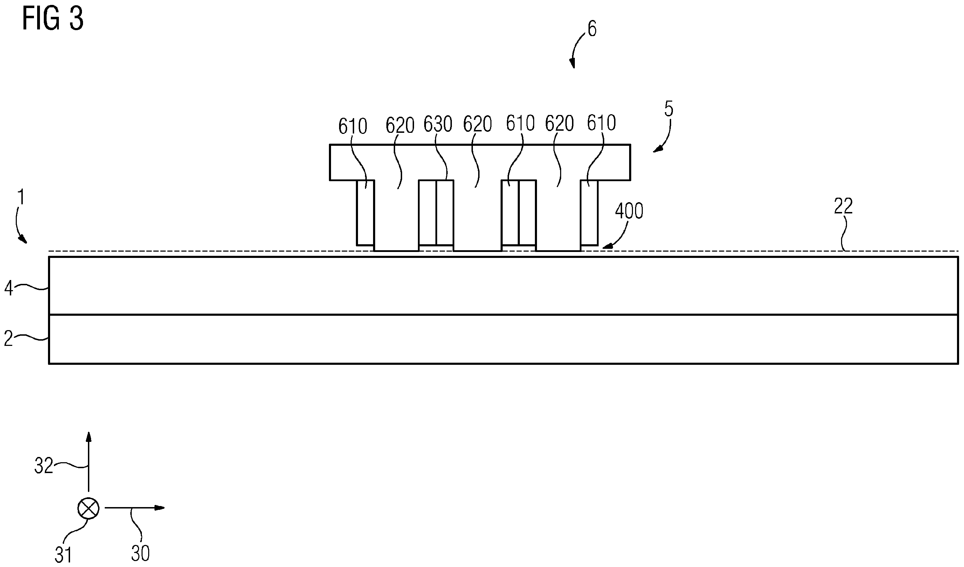

Figur 3 zeigt ein Ausführungsbeispiel einer elektrischen Maschine 6, die ein Sekundärteil 1 umfasst und ein Primärteil 5, das im Betrieb der elektrischen Maschine 6 über einen Luftspalt 400 mit dem Sekundärteil 1 magnetisch zusammenwirkt, wobei sich der Luftspalt 400 entlang einer Ebene 22 erstreckt. Die Ebene 22 ist in der Querschnittsdarstellung der Figur 3 als strichlierte Linie 22 eingezeichnet, wobei sich die Ebene 22 in die erste Richtung 30 und die zweite Richtung 31 erstreckt. Die elektrische Maschine 6 weist eine Wicklung 610 auf, die zum Betrieb der elektrischen Maschine 6 mit dem mehrpoligen Bauteil 100 über einen Luftspalt 400 zwischen Primärteil 5 und Sekundärteil 7 magnetisch zusammenwirkt. Das Primärteil 5 weist neben der Wicklung 610 weitere konzentrierte Wicklungen 610 auf, die denselben Aufbau wie die Wicklung 610 aufweisen. Diese konzentrierten Wicklungen 610 sind als Zahnspulenwicklungen 610 ausgebildet und auf Zähnen 620 des Primärteils 5 aufgeschoben. Dabei liegen zwei Wicklungshälften benachbarter Wicklungen 610 in einer Nut 630 des Primärteils 5 zwischen zwei Zähnen 620. In einem Betrieb der elektrischen Maschine 6 können die Wicklungen 610, die in unterschiedlichen Nuten 630 liegen, mit Wechselströmen unterschiedlicher Phasen eines Dreiphasenwechselstromquelle, beispielsweise eines Umrichters, bestromt werden, um ein sich in der Ebene 22 entlang des Primärteils 5 änderndes Magnetfeld zu erzeugen, dass eine relative Bewegung des Primärteils 5 zum Sekundärteil 7 bzw. des Sekundärteils 7 zum Primärteil 5 in der Ebene 22 bewirkt.

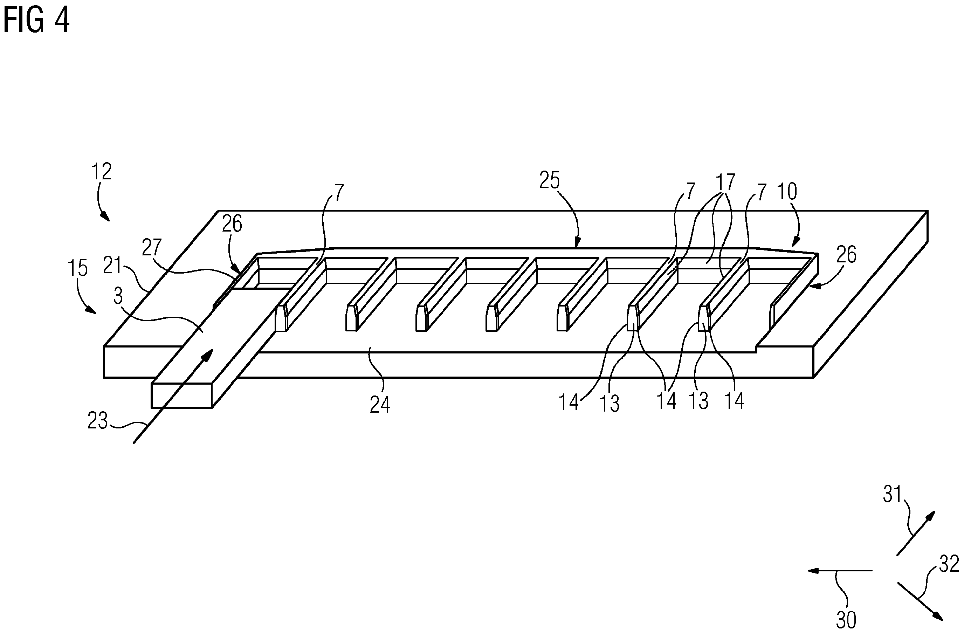

Figur 4 zeigt eine Momentaufnahme eines Ausführungsbeispiels eines Verfahrens beim Anordnen der Permanentmagnete 3, wobei diese zwischen Distanzelementen 7,27 der Schablone 4, insbesondere dem ersten Schablonenteil 10, angeordnet werden. Wie in Figur 4 zu sehen, wird ein Permanentmagnet 3 von der zweiten Seite 15 entlang den Distanzelementen 7,27 eingeschoben und damit angeordnet. Die Einschieberichtung wird in Figur 4 durch den Pfeil 23 angedeutet. Hierzu wurde das erste Schablonenteil 10 auf einer Unterlage 21 positioniert, um in einem darauffolgenden Schritt den Permanentmagneten 3 von der zweiten Seite 15 entlang der Unterlage 21 und den Distanzelementen 7,27 einzuschieben. Die Unterlage 21 weist hierfür eine magnetische Vorrichtung 24 für ein Halten der Permanentmagnete 3 auf. In dem Ausführungsbeispiel der Figur 4 weist die magnetische Vorrichtung 24 ein ferromagnetisches Material auf. Die magnetische Vorrichtung 24 weist auf der Oberfläche des ferromagnetischen Materials, auf der die Distanzelemente 7,27 positioniert werden und die Permanentmagnete 3 eingeschoben werden, mit einer Schicht versehen, so dass die Permanentmagnete 3 entlang der Unterlage 21, insbesondere der magnetischen Vorrichtung 24, verschoben werden können, ohne dass die Permanentmagnete 3 sich von der Unterlage lösen. Die Distanzelemente 7,27 weisen an freien Enden 13 des ersten Schablonenteils 10 Einführschrägen 14 zum Einschieben der Permanentmagnete 3 auf. Die Einführschrägen 14 sind Fasen, die durch Anschrägen der Kanten an den freien Enden 13 der Distanzelemente 7,27 entstanden sind oder in einer Spritzgussform beim Herstellen des ersten Schablonenteils 10 ausgeformt wurden. Die Unterlage 21 weist einen gegenüber der magnetischen Vorrichtung 24 hervorstehenden Rand auf, der zum Einschieben der Permanentmagnete 3 einseitig offen ist. Der Rand der Unterlage 21 dient als Anschlag 25,26 zum Positionieren der Distanzelemente 7,27 auf der Unterlage 21. Das erste Schablonenteil 10 weist eine äußere Berandung auf, die komplementär zu den Anschlägen 25,26 ist, so dass die Distanzelemente 7,27 durch ihre stoffschlüssige Verbindung mit dem ersten Schablonenteil 10 vorteilhaft auf der Unterlage 21 positioniert werden können.

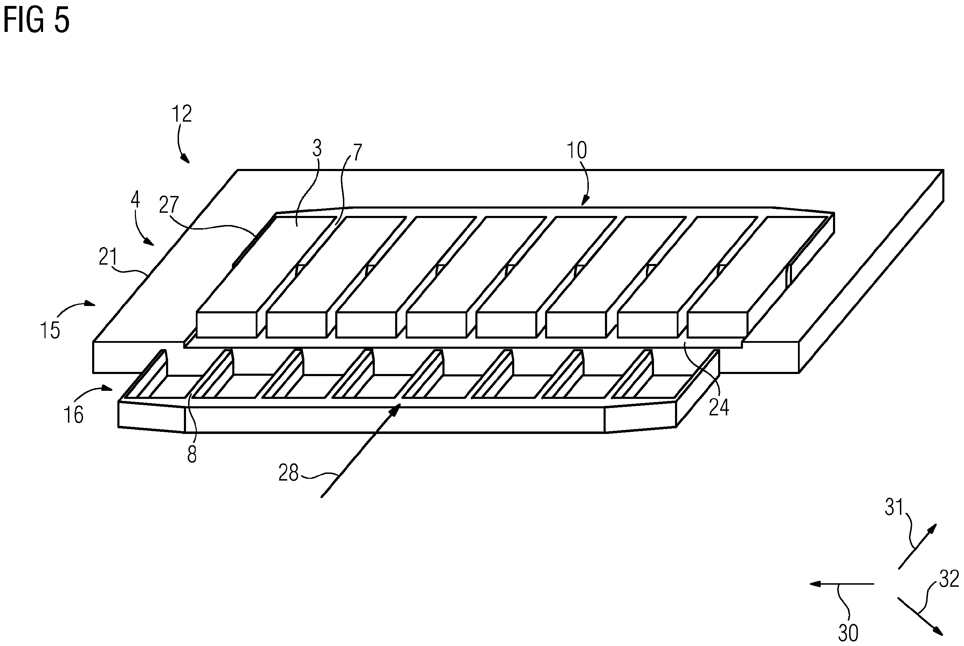

Figur 5 zeigt eine Momentaufnahme eines Ausführungsbeispiels eines Verfahrens bei einer Montage eines zweiten Schablonenteils 16. Nachdem alle Permanentmagnete 3 für ein Sekundärteil 1 gemäß dem Ausführungsbeispiel der Figur 1 zwischen den Distanzelementen 7,27 der Schablone 4 angeordnet wurden, wird das zweite Schablonenteil 16 auf der Unterlage 21 angeordnet. Hierzu kann das zweite Schablonenteil 16 entlang der magnetischen Vorrichtung 24 in einer Richtung gemäß dem Pfeil 28 in Figur 5 an die Permanentmagnete 3 geschoben werden. Hierbei werden die Distanzelemente 8 des zweiten Schablonenteils 16 zwischen die Permanentmagnete 3 geschoben. So kann eine verzahnte Verbindung zwischen dem ersten Schablonenteil 10, dem zweiten Schablonenteil 16, dem Permanentmagneten 3 und dem noch fehlenden Trägerteil 2 vorteilhaft erreicht werden.

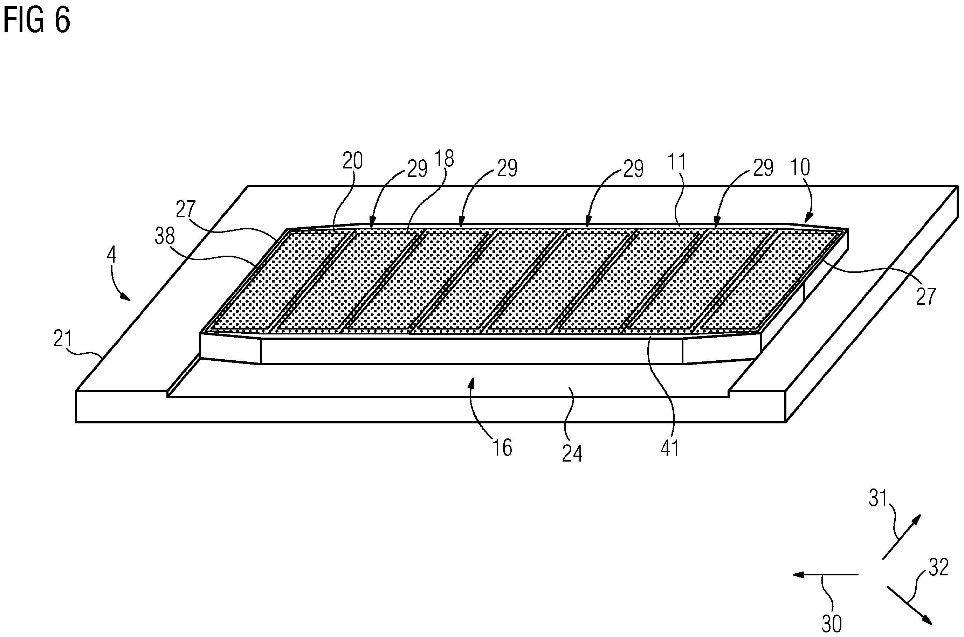

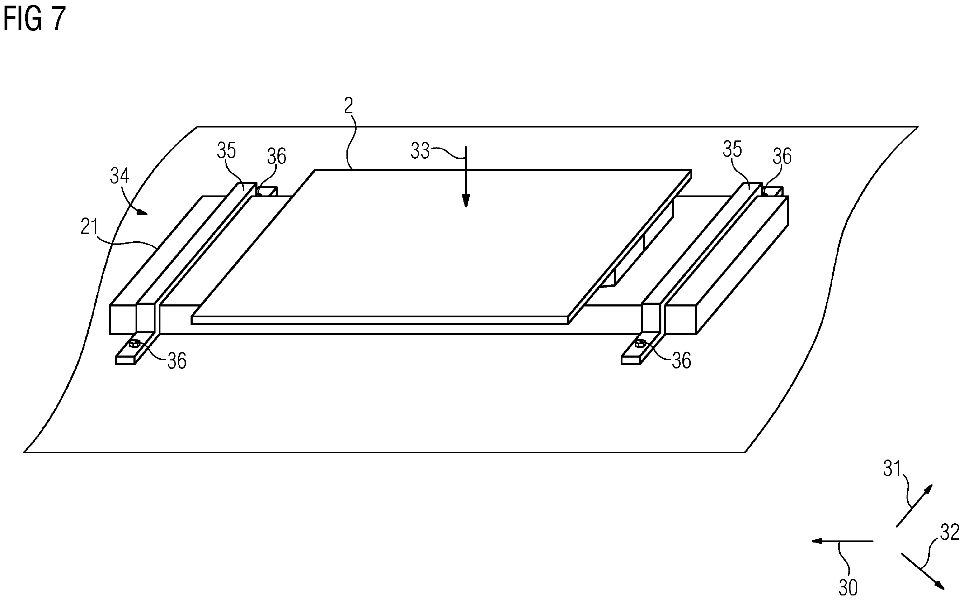

Figur 6 zeigt eine Momentaufnahme eines Ausführungsbeispiels eines Verfahrens nach einem Versehen der Permanentmagnete 3 und der Schablone 4 mit dem Klebstoff 20. Wie in Figur 6 durch die Pfeile 29 angedeutet, werden die Permanentmagnete 3 und die Schablone 4 mit dem Klebstoff 20 versehen. Wie in Figur 6 zu sehen, erstreckt sich der Klebstoff 20 in einem rechteckförmigen Klebebett, das in einfacher Weise beim Versehen der Permanentmagnete 3 und der Schablone 4 mit Klebstoff 20 auf die Permanentmagnete 3 und die Schablone 4 vorteilhaft aufgebracht werden kann. Außerhalb der Permanentmagnete 3 und der Schablone 4, d.h. auf der Unterlage 21 und auf größere Flächen der Oberseite 9 des später aufgebrachten Trägerteils 2 Klebstoff 20 vorteilhaft vermieden. Der Klebstoff 20, d.h. dessen Klebebett, muss sich dabei nicht vollständig über die Trägerteil-nahen Flächen der Verbindungsstücke 11, 41 bzw. der Distanzelemente 27 erstrecken, sondern nur insoweit, als er entlang der Umfänge der Permanentmagnete 3 in die Klebstoffspalte 18,38, insbesondere auch unterstützt durch eine Einwirkung der Schwerkraft auf dem Klebstoff 20, eindringen kann. Die Trägerteil-nahen Flächen der Verbindungsstücke 11,41 und der Distanzelemente 7, die mit Klebstoff 20 versehen sind, sind Klebeflächen, die sich in ihrer Längserstreckung in verschiedenen Richtungen 30,31 erstrecken, und gehören zu der verzahnten Verbindung zwischen dem ersten und zweiten Schablonenteil 10 und 16, den Permanentmagneten 3 und dem Trägerteil 2. Des Weiteren gehören zu den Klebeflächen der verzahnten Verbindung die mit Klebstoff bestrichenen Fasen 17 des ersten Schablonenteils 10 und des zweiten Schablonenteils 16, wobei sich diese Klebeflächen auch in der dritten Richtung 32 erstrecken, da diese Klebeflächen einen Normalenvektor mit einer vektoriellen Komponente in der dritten Richtung 32 aufweisen. In dem Ausführungsbeispiel gemäß Figur 6 werden die Permanentmagnete 3 und die Schablone 4 auf eine der Unterlage 21, insbesondere der magnetischen Vorrichtung 24, abgewandten Seite mit dem Klebstoff 20 versehen, der im Vergleich zu einem Sekundenkleber eine lange Aushärtezeit aufweist. In dem Ausführungsbeispiel wird ein zweikomponentiger Epoxidharz-Klebstoff verwendet. Dieser Klebstoff wird in ca. 10 Minuten handfest. Aufgrund der Magnetkräfte der Permanentmagnete 3 ist es aber angebracht, mindestens 30 Minuten zu warten, bis eine ausreichende Handfestigkeit erreicht worden ist, damit die Permanentmagnete 3 sich nicht von alleine bzw. mit geringer Krafteinwirkung von der Trägerplatte 2 lösen. Bei der Herstellung des Sekundärteils 2 zu Versuchszwecken kann man den Klebstoff z.B. über Nacht aushärten lassen. Für eine kostengünstige Herstellung des Sekundärteils in hoher Qualität in großen Stückzahlen würde man das Aushärten des Klebstoffs 20 durch Erwärmen der Trägerplatte 2 beschleunigen, nachdem das Trägerteil 2 gemäß einer Momentaufnahme der Figur 7 mit seiner Oberseite 9 auf dem Klebstoff 20 angeordnet wurde.

Die Figur 7 enthält den Pfeil 33, der eine Richtung angibt, in der die Trägerplatte 2 geführt wird, um diese mit ihrer Oberseite 9 auf dem Klebstoff 20 anzuordnen. Hierbei werden die Schablone 4 und die Permanentmagnete 3 mit einer übergreifenden Fixiervorrichtung 34 in ihrer relativen Position zueinander gehalten, bis der Klebstoff 20 ausgehärtet ist. Die übergreifende Fixiervorrichtung 34 weist die Unterlage 21 auf, die über Bügel 35 mit Schrauben 36 an der übergreifenden Fixiervorrichtung 34 befestigt ist. Dadurch, dass die Schablone 4 und die Permanentmagnete 3 eine geschlossene Oberfläche 19 bilden, kann die übergreifende Fixiervorrichtung 34, insbesondere die magnetische Vorrichtung 24, die Schablone 4 und die Permanentmagnete 3 übergreifen und an drei Seitenflächen der Schablone 4 durch die Anschläge 25,26 in der ersten Richtung 30 fixieren und in der zweiten Richtung 31 zumindest in der positiv gezählten Richtung 31 fixieren. In der negativ gezählten Richtung 31, d.h. entgegen der Richtung 31, weist die Unterlage 21 keinen Rand auf, da von dort die Permanentmagnete 3 gemäß Figur 4 eingeschoben werden. Jedoch kann dort vorteilhaft nach der Montage des zweiten Schablonenteils 16 (Im Zusammenhang mit Figur 5 beschrieben), ein zusätzliches Teil als Rand angebracht werden, um die Schablone 4 und die Permanentmagnete 3 in negativ gezählter Richtung 31 zu fixieren.

Ein Ausführungsbeispiel eines Verfahrens zur Herstellung eines Sekundärteils 2 weist die Schritte auf, die anhand der Momentaufnahmen der Figuren 4 bis 7 beschrieben wurden, wobei diese Figuren in der Reihenfolge ihrer Nummerierung in zeitlichen Abständen zueinander Momentaufnahmen des Ausführungsbeispiels des Verfahrens wiedergeben.

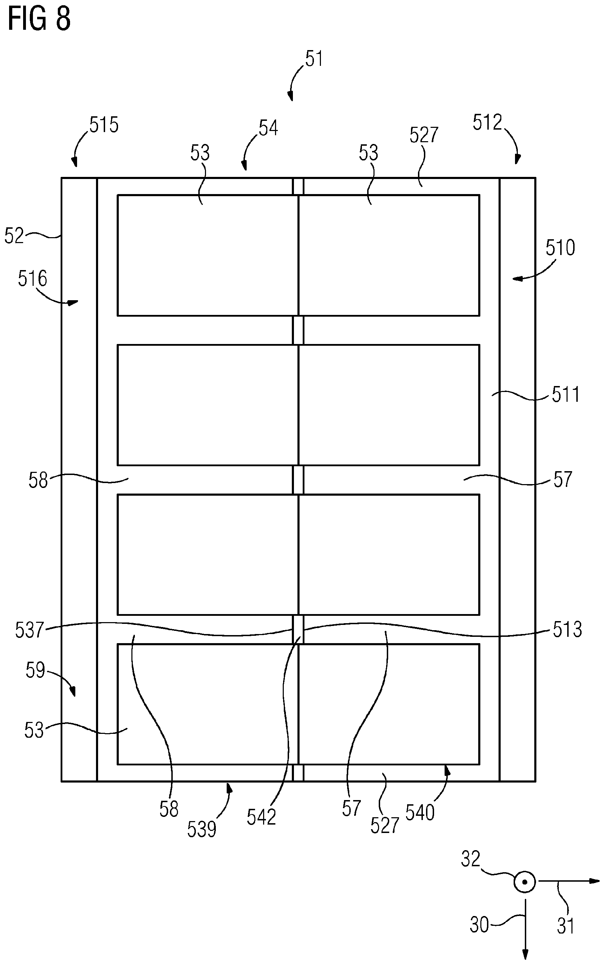

Figur 8 zeigt eine Ansicht einer Oberseite 59 eines weiteren Ausführungsbeispiels eines Sekundärteils 51 für eine elektrische Maschine 6. Dieses Ausführungsbeispiel weist Merkmale auf, die anhand der Figuren 1 bis 7 beschrieben wurden. Die Merkmale wurden in Figur 8 größtenteils mit Bezugszeichen versehen, die aus den Bezugszeichen der Figuren 1 bis 7 durch Voranstellen einer "5" entstanden sind. So ist z.B. die Beschreibung für den ersten Schablonenteil 10 der Figur 1 entsprechend auf das erste Schablonenteil 510 der Figur 8 zu übertragen. Auf die unterschiedlichen Merkmale des Sekundärteils 51 gemäß Figur 8 gegenüber dem Sekundärteil 1 der Figuren 1 bis 7 wird nachfolgend eingegangen.

Quaderförmige Permanentmagnete 53 sind zwischen den Distanzelementen 57,527 angeordnet, wobei die Permanentmagnete 53 geschrägt angeordnet sind. Durch diese geschrägte Anordnung verläuft eine Kante 540 eines quaderförmigen Permanentmagneten 53 nicht parallel zu einer Kante 539 der Trägerplatte 52. Bei dem Sekundärteil 51 sind zwei Permanentmagnete 53 in einer Richtung, die überwiegend in ihrer Orientierung der zweiten Richtung 31 entspricht, hintereinander direkt aneinander gestoßen, so dass eine Kante 540 eines Permanentmagneten 53 durch den direkt angrenzenden Permanentmagneten 53 fortgesetzt wird. Die Permanentmagnete 53 sind zwischen den Distanzelementen 57,58,527 angeordnet, wobei deren Kanten 540 parallel zueinander ausgerichtet sind. Aufgrund der geschrägten Anordnung der Permanentmagnete 53 weist das Verbindungsstück 511 des ersten Schablonenteils 510 in der ersten Richtung 30 gesehen unterschiedliche Querschnitte entlang der Permanentmagnete 53 auf. Dadurch können das erste Schablonenteil 510 und das zweite Schablonenteil 516 an ihren von den Permanentmagneten 53 abgewandten Seiten zumindest entlang zweier aufeinander folgender Permanentmagnete 53 vorteilhaft eine durchgehende, ebene Seitenfläche aufweisen. Im Idealfall sollen die Permanentmagnete 53 bei dem Sekundärteil 51 gemäß Figur 8 genauso wie die Permanentmagnete 3 beim Sekundärteil 1 gemäß Figuren 1 bis 7 ohne Freiräume zwischen den Distanzelementen 7,8,27,57,58,527 bzw. den Verbindungsstücken 11,511 des ersten Schablonenteils 11,511 und des zweiten Schablonenteils 16,516 angeordnet sein. Bei dem Sekundärteil 51 gemäß Figur 8 sind hierzu die Distanzelemente 57,58,527 kürzer als die Permanentmagnete 53. Bei dem Sekundärteil 51 gemäß Figur 8 ist so zwischen den Distanzelementen des ersten Schablonenteils 511 und des zweiten Schablonenteils 516 Zwischenräume 542 vorhanden. So können das erste und das zweite Schablonenteil 511,516 mit den Permanentmagneten 53 in Kontakt gebracht werden und es kann vorteilhaft in einer hohen Qualität eine exakte schräge Anordnung der Permanentmagnete 53 zueinander vorteilhaft erreicht werden.

Ein weiteres Ausführungsbeispiel eines Sekundärteils weist das Sekundärteil 2 gemäß der Figur 1 auf, wobei die Schablone 4 und die Permanentmagnete 3 eine lackierte Oberfläche 19 aufweisen.

Bei einem Beispiel einer Verwendung einer Schablone 4 mit Distanzelementen 7,27,8 für ein Sekundärteil 1 wird die Schablone 4 zum Anordnen der Permanentmagnete 3 verwendet. Anschließend wird die Schablone 4 zur Befestigung der Permanentmagnete 3 auf der Oberseite 9 des Trägerteils 2 durch Verkleben mit dem Trägerteil 2 verwendet, wobei das Trägerteil 2 ein ferromagnetisches Material aufweist. Weiterhin wird die Schablone 4 beim Versehen der Permanentmagnete 3 mit einem Klebstoff 20 verwendet. Die Verwendung der Schablone 4 kann man anhand der Figur 1 oder den Figuren 2 bis 7 nachvollziehen.

Obwohl die Erfindung im Detail durch die bevorzugten Ausführungsbeispiele näher beschrieben wurde, ist sie nicht auf die offenbarten Beispiele beschränkt. Andere Variationen können vom Fachmann im Rahmen des durch die Ansprüche bestimmten Schutzumfangs abgeleitet werden.

## Patentansprüche

1. Sekundärteil (1,51) für eine elektrische Maschine (6) umfassend
- ein Trägerteil (2,52) mit einem ferromagnetischen Material,
- Permanentmagnete (3,53), und
- eine Schablone (4,54) mit Distanzelementen (7,27,57,527),
- wobei die Permanentmagnete (3,53) zwischen den Distanzelementen (7,27,57,527) angeordnet sind,
- wobei die Permanentmagnete (3,53) und die Schablone (4,54) zur Befestigung auf einer Oberseite (9,59) des Trägerteils (2,52) mit dem Trägerteil (2,52) verklebt sind,
- wobei die Schablone (4,54) ein erstes Schablonenteil (10,510) umfasst, wobei das erste Schablonenteil (10,510) ein Verbindungsstück (11,511) aufweist, das an einer ersten Seite (12,512) der Permanentmagnete (3,53) entlang dem Trägerteil (2,52) verläuft und stoffschlüssig die Distanzelemente (7,27,57,527) an der ersten Seite (12,512) der Permanentmagnete (3,53) miteinander verbindet,
- wobei die Schablone (4,54) ein zweites Schablonenteil (16,516) umfasst, das zumindest stückweise an einer der ersten Seite (12,512) abgewandten zweiten Seite (15,515) der Permanentmagnete (3,53) entlang des Trägerteils (2,52) verläuft und
- wobei das erste und das zweite Schablonenteil (10,510,16, 516) identische Schablonenteile sind.

2. Sekundärteil (1,51) nach Anspruch 1,
wobei sich das Trägerteil (2,52) in einer ersten Richtung (30) erstreckt und eine Oberseite (9,59) aufweist, an der die Permanentmagnete (3,53) in der ersten Richtung (30) nebeneinander zwischen den Distanzelementen (7,27,57,527) angeordnet sind, und sich eine zweite Richtung (31) senkrecht zu der ersten Richtung (30) parallel zur Oberseite (9,59) des Trägerteils (2,52) erstreckt.

3. Sekundärteil (1,51) nach Anspruch 1 oder 2, wobei die Distanzelemente (7,27,57,527) an freien Enden (13,513) des ersten Schablonenteils (10,510) Einführschrägen (14) zum Einschieben der Permanentmagnete (3,53) aufweisen.

4. Sekundärteil (1,51) nach einem der vorhergehenden Ansprüche, wobei das Sekundärteil (1,51) an der Oberseite (9,59) des Trägerteils (2,52) zwischen Fasen (17) der Schablone (4,54) und den Permanentmagneten (3,53) Klebstoffspalte (18,38) aufweist.

5. Sekundärteil (1,51) nach einem der vorhergehenden Ansprüche, wobei die Distanzelemente (7,27,57,527) an einem ersten und einem zweiten Ende der Schablone (4,54) eine Breite (B) aufweisen, die der Hälfte eines Abstandes (A) zwischen zwei Permanentmagneten (3,53) des Sekundärteils (1,51) entspricht.

6. Sekundärteil (1,51) nach einem der vorhergehenden Ansprüche, wobei die Schablone (4,54) und die Permanentmagnete (3,53) eine geschlossene Oberfläche (19) bilden.

7. Sekundärteil (1,51) nach einem der vorhergehenden Ansprüche, wobei die Schablone (4,54) und die Permanentmagnete (3,53) eine lackierte Oberfläche (19) aufweisen.

8. Sekundärteil (1,51) nach einem der vorhergehenden Ansprüche, wobei das Sekundärteil (1,51) mit einem Verfahren hergestellt ist, bei dem die Permanentmagnete (3,53) zwischen den Distanzelementen (7,27,57,527) der Schablone (4,54) angeordnet werden und die Permanentmagnete (3,53) und die Schablone (4,54) mit einem Klebstoff (20) versehen werden und das Trägerteil (2,52) mit seiner Oberseite (9,59) auf dem Klebstoff (20) angeordnet wird.

9. Elektrische Maschine (6), umfassend ein Sekundärteil (1,51) nach einem der vorhergehenden Ansprüche, und
- ein Primärteil (5), das in einem Betrieb der elektrischen Maschine (6) über einen Luftspalt (400) mit dem Sekundärteil (1,51) magnetisch zusammenwirkt,
- wobei sich der Luftspalt (400) entlang einer Ebene (22) erstreckt.

10. Verfahren zur Herstellung eines Sekundärteils (1,51) nach einem der Ansprüche 1 bis 8,
- wobei die Permanentmagnete (3,53) zwischen Distanzelementen (7,27,57,527) der Schablone (4,54) angeordnet werden,
- wobei das Trägerteil (2,52) ein ferromagnetisches Material aufweist,
- wobei die Permanentmagnete (3,53) und die Schablone (4,54) zur Befestigung auf einer Oberseite (9,59) des Trägerteils (2,52) mit dem Trägerteil (2,52) verklebt werden
- wobei die Schablone (4,54) ein erstes Schablonenteil (10,510) umfasst, wobei das erste Schablonenteil (10,510) ein Verbindungsstück (11,511) aufweist, das an einer ersten Seite (12,512) der Permanentmagnete (3,53) entlang dem Trägerteil (2,52) verläuft und stoffschlüssig die Distanzelemente (7,27,57,527) an der ersten Seite (12,512) der Permanentmagnete (3,53) miteinander verbindet,
- wobei die Schablone (4,54) ein zweites Schablonenteil (16,516) umfasst, das zumindest stückweise an einer der ersten Seite (12,512) abgewandten zweiten Seite (15,515) der Permanentmagnete (3,53) entlang des Trägerteils (2,52) verläuft und
- wobei das erste und das zweite Schablonenteil (10,510,16, 516) identische Schablonenteile sind.

11. Verfahren zur Herstellung eines Sekundärteils (1,51) nach Anspruch 10,
- wobei vor dem Anordnen der Permanentmagnete (3,53) zwischen den Distanzelementen (7,27,57,527) die Distanzelemente (7,27,57,527) auf einer Unterlage (21) positioniert werden,
- wobei die Permanentmagnete (3,53) und die Schablone (4,54) auf einer der Unterlage (21) abgewandten Seite mit einem Klebstoff (20) versehen werden,
- wobei das Trägerteil (7,52) mit seiner Oberseite (9,59) auf dem Klebstoff (20) angeordnet wird.

## Claims

1. Secondary part (1, 51) for an electric machine (6) comprising
- a carrier part (2, 52) with a ferromagnetic material,
- permanent magnets (3, 53), and
- a template (4, 54) with spacer elements (7, 27, 57, 527),
- wherein the permanent magnets (3, 53) are arranged between the spacer elements (7, 27, 57, 527),
- wherein the permanent magnets (3, 53) and the template (4, 54) for fastening on a top side (9, 59) of the carrier part (2, 52) are glued to the carrier part (2, 52),
- wherein the template (4, 54) comprises a first template part (10, 510), wherein the first template part (10, 510) has a connecting piece (11, 511) which runs along the carrier part (2, 52) on a first side (12, 512) of the permanent magnets (3, 53) and connects the spacer elements (7, 27, 57, 527) with a material fit to on another on the first side (12, 512) of the permanent magnets (3, 53),
- wherein the template (4, 54) comprises a second template part (16, 516) which runs along the carrier part (2, 52) at least piece by piece on a second side (15, 515) of the permanent magnets (3, 53) facing away from the first side (12, 512) and
- wherein the first and the second template part (10, 510, 16, 516) are identical template parts.

2. Secondary part (1, 51) according to claim 1,
wherein the carrier part (2, 52) extends in a first direction (30) and has a top side (9, 59), on which in the first direction (30) the permanent magnets (3, 53) are arranged adjacent to one another between the spacer elements (7, 27, 57, 527) and a second direction (31) extends at right angles to the first direction (30) parallel to the top side (9, 59) of the carrier part (2, 52).

3. Secondary part (1, 51) according to claim 1 or 2, wherein the spacer elements (7, 27, 57, 527) have lead-in chamfers (14) for inserting the permanent magnets (3, 53) on free ends (13, 513) of the first template part (10, 510).

4. Secondary part (1, 51) according to one of the preceding claims, wherein the secondary part (1, 51) on the top side (9, 59) of the carrier part (2, 52) has adhesive gaps (18, 38) between fibres (17) of the template (4, 54) and the permanent magnets (3, 53).

5. Secondary part (1, 51) according to one of the preceding claims, wherein at a first and a second end of the template (4, 54) the spacer elements (7, 27, 57, 527) have a width (B) which corresponds to half of a distance (A) between two permanent magnets (3, 53) of the secondary part (1, 51).

6. Secondary part (1, 51) according to one of the preceding claims, wherein the template (4, 54) and the permanent magnets (3, 53) form a closed surface (19).

7. Secondary part (1, 51) according to one of the preceding claims, wherein the template (4, 54) and the permanent magnets (3, 53) have a lacquered surface (19).

8. Secondary part (1, 51) according to one of the preceding claims, wherein the secondary part (1, 51) is produced with a method, in which the permanent magnets (3, 53) are arranged between the spacer elements (7, 27, 57, 527) of the template (4, 54) and the permanent magnets (3, 53) and the templates (4, 54) are provided with an adhesive (20) and the carrier part (2, 52) is arranged with its top side (9, 59) on the adhesive (20) .

9. Electric machine (6), comprising a secondary part (1, 51) according to one of the preceding claims, and
- a primary part (5), which during operation of the electric machine (6) interacts magnetically with the secondary part (1, 51) by way of an air gap (400),
- wherein the air gap (400) extends along a plane (22).

10. Method for producing a secondary part (1, 51) according to one of claims 1 to 8,
- wherein the permanent magnets (3, 53) are arranged between spacer elements (7, 27, 57, 527) of the template (4, 54),
- wherein the carrier part (2, 52) has a ferromagnetic material,
- wherein the permanent magnets (3, 53) and the template (4, 54) for fastening on a top side (9, 59) of the carrier part (2, 52) are glued to the carrier part (2, 52)
- wherein the template (4, 54) comprises a first template part (10, 510), wherein the first template part (10, 510) has a connecting piece (11, 511) which runs along the carrier part (2, 52) on a first side (12, 512) of the permanent magnets (3, 53) and connects the spacer elements (7, 27, 57, 527) to one another with a material fit on the first side (12, 512) of the permanent magnets (3, 53),
- wherein the template (4, 54) comprises a second template part (16, 516) which runs along the carrier part (2, 52) at least piece by piece on a second side (15, 515) of the permanent magnets (3, 53) facing away from the first side (12, 512) and
- wherein the first and the second template part (10, 510, 16, 516) are identical template parts.

11. Method for producing a secondary part (1, 51) according to claim 10,
- wherein prior to arranging the permanent magnets (3, 53) between the spacer elements (7, 27, 57, 527) the spacer elements (7, 27, 57, 527) are positioned on a base (21),
- wherein the permanent magnets (3, 53) and the template (4, 54) are provided with an adhesive (20) on a side facing away from the base (21),
- wherein the carrier part (7, 52) is arranged with its top side (9, 59) on the adhesive (20).

## Revendications

1. Partie (1, 51) secondaire d'une machine (6) électrique, comprenant
- une partie (2, 52) de support en un matériau ferromagnétique,
- des aimants (3, 53) permanents, et
- un gabarit (4, 54) ayant des éléments (7, 27, 57, 527) d'entretoisement,
- dans laquelle les aimants (3, 53) permanents sont disposés entre les éléments (7, 27, 57, 527) d'entretoisement,
- dans laquelle les éléments (3, 53) permanents et le gabarit (4, 54) sont, pour la fixation à un côté (9, 59) supérieur de la partie (2, 52) de support, collés à la partie (2, 52) de support,
- dans laquelle le gabarit (4, 54) comprend une premier partie (10, 510) de gabarit, la première partie (10, 510) de gabarit ayant une pièce (11, 511) de liaison, qui s'étend sur un premier côté (12, 512) des aimants (3, 53) permanents, le long de la partie (2, 52) de support, et qui relie entre eux, à coopération de matière, les éléments (7, 27, 57, 527) d'entretoisement sur le premier côté (12, 512) des aimants (3, 53) permanents,
- dans laquelle le gabarit (4, 54) comprend une deuxième partie (16, 516) de gabarit, qui s'étend, au moins par morceau, sur un deuxième côté (15, 515), loin du premier côté (12, 512), des aimants (3, 53) permanents, le long de la partie (2, 52) de support et
- dans laquelle la première et la deuxième parties (10, 510, 16, 516) de gabarit sont des parties de gabarit pareilles.

2. Partie (1, 51) secondaire suivant la revendication 1, dans laquelle la partie (2, 52) de support s'étend dans une première direction (30) et a un côté (9, 59) supérieur où les aimants (3, 53) permanents sont disposés les uns à côté des autres dans la première direction (30) entre les éléments (7, 27, 57, 527) d'entretoisement et une deuxième direction (31) s'étend perpendiculairement à la première direction (30), parallèlement au côté (9, 59) supérieur de la partie (2, 52) de support.

3. Partie (1, 51) secondaire suivant la revendication 1 ou 2, dans laquelle les éléments (7, 27, 57, 527) d'entretoisement ont, aux extrémités (13, 513) libres de la première partie (10, 510) du gabarit, des parties (14) d'introduction pour faire entrer les aimants (3, 53) permanents.

4. Partie (1, 51) secondaire suivant l'une des revendications précédentes, dans laquelle la partie (1, 51) secondaire a, sur le côté (9, 59) supérieur de la partie (2, 52) de support, des intervalles (18, 38) de colle entre des biseaux (17) du gabarit (4, 54) et les aimants (3, 53) permanents.

5. Partie (1, 51) secondaire suivant l'une des revendications précédentes, dans laquelle les éléments (7, 27, 57, 527) d'entretoisement ont, à une première et à une deuxième extrémités du gabarit (4, 54), une largeur (B), qui représente la moitié d'une distance (A) entre deux aimants (3, 53) permanents de la partie (1, 51) secondaire.

6. Partie (1, 51) secondaire suivant l'une des revendications précédentes, dans laquelle le gabarit (4, 54) et les aimants (3, 53) permanents forment une surface (19) fermée.

7. Partie (1, 51) secondaire suivant l'une des revendications précédentes, dans laquelle le gabarit (4, 54) et les aimants (3, 53) permanents ont une surface (19) vernis.

8. Partie (1, 51) secondaire suivant l'une des revendications précédentes, dans laquelle la partie (1, 51) secondaire est fabriquée par un procédé, dans lequel on met les aimants (3, 53) permanents entre les éléments (7, 27, 57, 527) d'entretoisement du gabarit (4, 54) et on munit les aimants (3, 53) permanents et le gabarit (4, 54) d'une colle (20) et on met la partie (2, 52) de support, par son côté (9, 59) supérieur, sur la colle (20).

9. Machine (6) électrique, comprenant une partie (1, 51) secondaire suivant l'une des revendications précédentes, et
- une partie (5) primaire, qui, lorsque la machine (6) électrique est en fonctionnement, coopère magnétiquement avec la partie (1, 51) secondaire par un entrefer (400),
- dans laquelle l'entrefer (400) s'étend suivant un plan (22).

10. Procédé de fabrication d'une partie (1, 51) secondaire suivant l'une des revendications 1 à 8,
- dans lequel on met les aimants (3, 53) permanents entre des éléments (7, 27, 57, 527) d'entretoisement du gabarit (4, 54),
- dans lequel la partie (2, 52) de support a un matériau ferromagnétique,
- dans lequel on colle les aimants (3, 53) permanents et le gabarit (4, 54) pour la fixation sur un côté (9, 59) supérieur de la partie (2, 52) de support à la partie (2, 52) de support,
- dans lequel le gabarit (4, 54) comprend une première partie (10, 510) de gabarit, la première partie (10, 510) de gabarit ayant une pièce (11, 511) de liaison, qui s'étend sur un premier côté (12, 512) des aimants (3, 53) permanents, le long de la partie (2, 52) de support et qui relie entre eux, à coopération de matière, les éléments (7, 27, 57, 527) d'entretoisement au premier côté (12, 512) des aimants (3, 53) permanents,
- dans lequel le gabarit (4, 54) comprend une deuxième partie (16, 516) de gabarit, qui s'étend, au moins par morceau, sur un deuxième côté (15, 515), loin du premier côté (12, 512), des aimants (3, 53) permanents, le long de la partie (2, 52) de support et
- dans laquelle la première et la deuxième parties (10, 510, 16, 516) de gabarit sont des parties de gabarit pareilles.

11. Procédé de fabrication d'une partie (1, 51) secondaire suivant la revendication 10,
- dans lequel, avant de mettre les aimants (3, 53) permanents entre les éléments (7, 27, 57, 527) d'entretoisement, on met les éléments (7, 27, 57, 527) d'entretoisement en position sur un support (21),
- dans lequel on munit les aimants (3, 53) permanents et le gabarit (4, 54), d'un côté loin du support (21), d'une colle (20),
- dans lequel on met la partie (7, 52) de support, par son côté (9, 59) supérieur, sur la colle (20).
